Europäisches Patentamt

(19) European Patent Office

Office européen des brevets

(11) Publication number: **0 128 308**
**B1**

# (12) EUROPEAN PATENT SPECIFICATION

(45) Date of publication of patent specification: **09.12.87**

(51) Int. Cl.⁴: **H 01 M 8/02**

(21) Application number: **84104372.2**

(22) Date of filing: **18.04.84**

(54) **Method of sealing abutting fuel cell plates by means of a polytetrafluorethylene spiral.**

(30) Priority: **19.04.83 US 486335**

(43) Date of publication of application:
**19.12.84 Bulletin 84/51**

(45) Publication of the grant of the patent:
**09.12.87 Bulletin 87/50**

(84) Designated Contracting States:
**DE FR GB IT**

(56) References cited:
**EP-A-0 083 938**
**CH-A- 333 904**
**FR-A-2 505 860**

**PATENTS ABSTRACTS OF JAPAN, vol. 7, no.
148, (E-184)(1293), June 29, 1983**

**EXTENDED ABSTRACTS, vol. 82-2, 1982, pages
467-468, abstract no. 288, PFENNINGTON N.J.
(US), P.N. ROSS Jr.: "Engineering analysis of
an NH3-air fuel cell system for vehicles"**

**PATENT ABSTRACTS OF JAPAN, vol. 7, no.
129, (E-179)(1274), June 4, 1983**

(73) Proprietor: **Energy Research Corporation
3 Great Pasture Road
Danbury Connecticut 06810 (US)**

(72) Inventor: **Chi, Chang Vum
118 Pocono Road
Brookfield Connecticut 06804 (US)**

(74) Representative: **Abitz, Walter, Dr.-Ing. et al
Abitz, Morf, Gritschneder, Freiherr von
Wittgenstein Postfach 86 01 09
D-8000 München 86 (DE)**

EP 0 128 308 B1

## Description

### Background of the Invention

This invention relates to a method of sealing abutting fuel cell plates so as to retard gas and liquid leakage.

In fuel cell constructions, it is sometimes the case that abutting surfaces of adjacent plates are utilized to define fluid (liquid or gas) passages for the cell. One such situation is described in European appln. No. 83 100 127.8 wherein first and second plates of adjacent first and second fuel cell sub-assemblies each define a section of a fuel cell cooler. In particular, the first plate has channels which open out of a first surface of the plate and a second surface of the second plate is abutted against this channeled first surface during stacking. This closes the channels and the two plates thereby together define closed passages for carrying a cooling fluid.

In order for the first and second plates to properly define these closed passages, it is essential that pre-selected regions i.e., those bordering the outermost channels, of the first and second surfaces, be sealed against fluid leakage. This may be accomplished by applying a sealing material to the pre-selected regions of one or the other or both of the surfaces. Previously, such sealing material has been applied by placing a flat, thin piece of polytetrafluoroethylene (PTFE) in these regions. However, application of PTFE in this manner has not been found to be entirely satisfactory, since the flat PTFE has little resiliency and may not conform to the irregularities of the abutting surfaces leaving minute gaps for fluid leakage.

CH—A—333,904 discloses a seal for pressure electrolysers consisting of asbestos fibers wrapped in fluorethylene material in the form of a spiral.

The invention as claimed in claim 1 solves the problem of how to apply PTFE material to pre-selected regions of abutting first and second surfaces of adjacent fuel cell plates in a manner to create a better fluid sealing effect.

### Summary of the Invention

In accordance with the principles of the present invention, the above and other objectives are realized by applying the PTFE material formed into a spiral to the pre-selected regions of the first surface of the first plate. When the second surface of the second plate is then abutted against the first surface of the first plate, a highly effective fluid seal brought about by the spiral form of the PTFE is found to result in the pre-selected regions of the first surface and the corresponding abutting regions of the second surface.

### Brief Description of the Drawing

The present invention will become more apparent upon reading the following detailed description in conjunction with the accompanying drawings, in which:

Fig. 1 shows a channeled fuel cell plate to which PTFE material in the form of a spiral has been applied;

Figs. 2 and 3 show the fuel cell plate 1 in abutting relationship to a similar channeled plate and to a flat plate, respectively; and

Fig. 4 illustrates a method for creating the PTFE spiral used on the plate of Fig. 1.

### Detailed Description

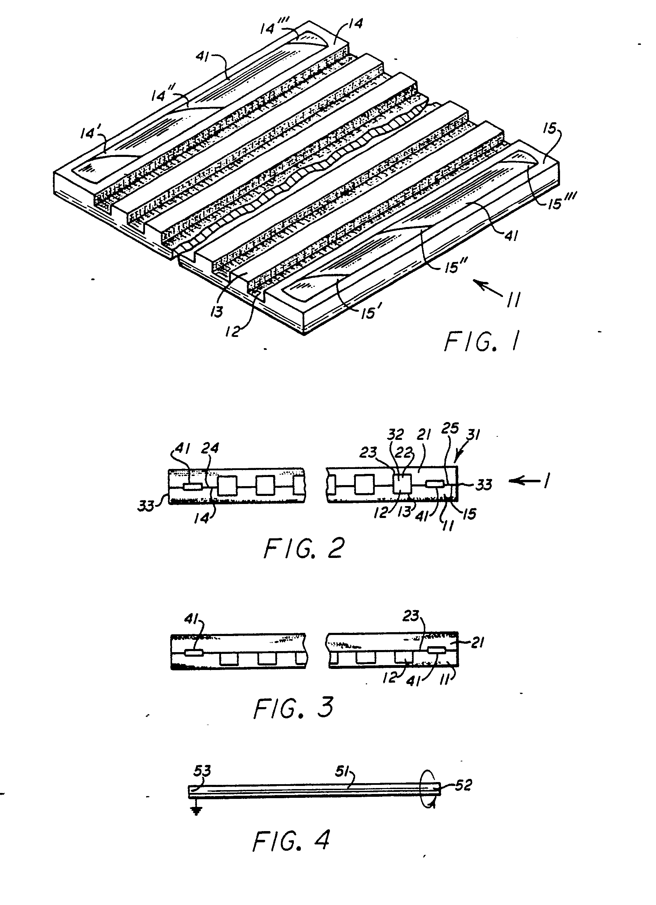

In Fig. 1, 11 is a fuel cell plate having channels 12 opening out of a first surface 13 of the plate. The plate 11 is to be used in conjunction with a second plate having a second surface which is to abut the surface 13 to thereby define closed passages 32 for carrying a fluid.

In Fig. 2, the second plate 21 is similar to the plate 11 in that it has channels 22 opening out of a second surface 23. These channels align with the channels 12 of the plate 11 to define the closed fluid passages 32 of the composite assembly 31.

In one type of fuel cell construction, the plates 11 and 21 might be the two halves of a fuel cell cooler. Furthermore, these plates might be carried at the ends of fuel cell sub-assemblies which are stacked to thereby define the cooler as disclosed in the above-mentioned copending application.

In any case, when the plates 11 and 12 are placed in abutting relationship, it is important that the fluid flowing in the closed passages pass through and not leak out of the sides 33 of the assembly. In accordance with the invention, such leakage is retarded by applying a PTFE seal of particular configuration to pre-selected regions of the abutting surface of at least one of the plates 11 and 21. More particularly, as shown in Fig. 1, PTFE material 41 arranged in spiral configuration is applied to regions 14 and 15 of the surface 13, such regions bordering the outermost of the channels 12.

With the PTFE spirals 41 applied as aforesaid, a very effective seal is found to result when the regions 14 and 15 are abutted against the corresponding regions 24 and 25 of the surface 23 of the plate 21. It is believed that the spiral configuration of the PTFE adds resiliency to the PTFE so that when it is squeezed between corresponding abutting surface regions 14 and 24 and 15 and 25, it is able to adapt to the surface irregularities of each of these regions. As a result, the likelihood of through gaps for the escape of fluid is significantly reduced and an overall more effective seal is realized.

The spiral form of PTFE used in Figs. 1 and 2 can be realized as shown diagrammatically in Fig. 4 by rotating a conventional thin flat piece or strip of PTFE 51 at one end 52, while holding the other end 53 stationary. Typically, a piece of PTFE of thickness .075 mm (.003 inches) and width 12.5 mm (0.5 inches) may be rotated to provide a spiral form which will have a thickness of 1.5 mm (.06 inches) and width of 1.5 mm (.06 inches). The initial strip of PTFE may be PTFE commercially sold by Dupont under the product name Teflon® PTFE.

The PTFE spiral 41 when applied to the regions 14 and 15 may be tacked or adhered to the surfaces at points along the regions 14 and 15 if desired. This may be realized by placement of a glue such as, for example, PLV-2000 HS Viton® Cement, at selected positions such as 14', 14'' and 14''' and 15', 15'' and 15''', as shown in Fig. 1.

Also, it should be noted that the plate 21 need not have channels 22 in its surface 23, but instead the surface 23 might be flat as shown in Fig. 3. In such case, the channels 12 may be deeper to provide the same passages 32 as provided by the two channeled plates 11, 21.

Instead of applying the Teflon in spiral form to the surfaces 14 and 15 it could have been applied to the surfaces 24 and 25. Also it could have been applied both to surfaces 14 and 15 and surfaces 24 and 25.

## Claims

1. Method of sealing first and second fuel cell plates (11, 21) having first and second surfaces (13, 23) wherein the first and second fuel cell plates are placed in abutting relationship to define a fuel cell assembly, said surfaces (13, 23) when in abutting relationship defining passages (32) for carrying fluid and said surfaces having pre-selected regions (14, 15, 24, 25) which when said surfaces (13, 23) are in abutting relationship abut to provide a seal to retard leakage of fluid from said passages (32), characterized in that prior to abutting said surfaces (13, 23), polytetrafluoroethylene material formed into a spiral (41) by twisting the material along its main axis is applied to the pre-selected regions (14, 15, 24, 25) of at least one of said first and second surfaces (13, 23).

2. Method in accordance with claim 1 wherein: said first surface (13) has channels (12) running between opposite first and second edges of said first surface (13), said channels (12) being spaced from each other and from opposite third and fourth edges of said first surface (13); and said pre-selected regions (14, 15) of said first surface (13) are the surface regions between the third edge and its closest channel and the fourth edge and its closest channel.

3. Method in accordance with claim 2 wherein: the pre-selected regions (24, 25) of said second surface (23) border said passages (32) when said first and second surfaces (13, 23) are in abutting relationship.

4. Method in accordance with claim 3 wherein: said second surface (23) is flat.

5. Method in accordance with claim 3 wherein: said second surface (23) has channels (22) running therethrough which align with the channels (12) of the first surface (13) when the first and second surfaces (13, 23) are in abutting relationship.

6. Method in accordance with claim 1 further comprising: applying adhesive to selection positions (14', 14'', 14''', 15', 15'', 15''') of said pre-selected regions (14, 15) of said one surface for securing said spiral polytetrafluoroethylene material (41) to said surface (13).

7. Method in accordance with claim 1 further comprising: prior to applying said spiral polytetrafluoroethylene material (41), forming said spiral polytetrafluoroethylene material including: securing a flat strip (51) of polytetrafluoroethylene material at one end (53) and rotating the other end (52) of said strip (51) of polytetrafluoroethylene material with said end secured.

8. The fuel cell assembly made by the method of claim 1.

## Patentansprüche

1. Verfahren zum Abdichten erster und zweiter Brennstoffzellenplatten (11, 21) mit ersten und zweiten Oberflächen (13, 23), wobei die ersten und zweiten Brennstoffzellenplatten angrenzend angeordnet werden, um eine Brennstoffzellenanordnung zu bilden, die Oberflächen (13, 23) angrenzend angeordnet Kanäle (32) zur Leitung von Fluid bilden und die Oberflächen bestimmte Bereiche (14, 15, 24, 25) aufweisen, die, wenn die Oberflächen (13, 23) aneinandergrenzend angeordnet sind, zur Bildung einer Abdichtung zur Verzögerung des Leckens von Fluid aus den Kanälen (32) aneinander angrenzen, dadurch gekennzeichnet, daß vor der angrenzenden Anordnung der Oberflächen (13, 23) Polytetrafluoräthylen-Werkstoff, der durch Drehen des Werkstoffes entlang seiner Hauptachse in eine Spirale (41) geformt ist, auf die bestimmten Bereiche (14, 15, 24, 25) wenigstens einer der ersten und zweiten Oberflächen (13, 23) aufgebracht wird.

2. Verfahren nach Anspruch 1, wobei die erste Oberfläche (13) Kanäle (12) aufweist, die zwischen entgegengesetzten Rändern der ersten Oberfläche (13) verlaufen, die Kanäle (12) Abstand voneinander und von den dritten und vierten Rändern der ersten Oberfläche (13) haben und die bestimmten Bereiche (14, 15) der ersten Oberfläche (13) die Oberflächenbereiche zwischen dem dritten Rand und seinem nächsten Kanal und dem vierten Rand und seinem nächsten Kanal sind.

3. Verfahren nach Anspruch 2, wobei die bestimmten Bereiche (24, 25) der zweiten Oberfläche (23) der Kanäle (32) begrenzen, wenn die ersten und zweiten Oberflächen (13, 23) aneinander angrenzen.

4. Verfahren nach Anspruch 3, wobei die zweite Oberfläche (23) eben ist.

5. Verfahren nach Anspruch 3, wobei die zweite Oberfläche (23) Kanäle (22) aufweist, die durch sie hindurchlaufen und mit den Kanälen (12) der ersten Oberfläche (13) fluchten, wenn die ersten und zweiten Oberflächen (13, 23) aneinander angrenzen.

6. Verfahren nach Anspruch 1, wobei ferner Klebstoff auf Auswahlstellen (14', 14'', 14''', 15', 15'', 15''') der bestimmten Bereiche (14, 15) der einen Oberfläche aufgebracht wird, um den Spiral-Polytetrafluoräthylen-Werkstoff (41) an der Oberfläche (13) zu befestigen.

7. Verfahren nach Anspruch 1, wobei ferner vor dem Auftragen des Spiral-Polytetrafluoräthylen-Werkstoffes (41) der Spiral-Polytetrafluoräthylen-Werkstoff geformt wird, indem ein ebener Streifen (51) aus Polytetrafluoräthylen-Werkstoff an dem einen Ende (53) festgehalten wird und das andere Ende (52) des Streifens (51) aus Polytetrafluoräthylen-Werkstoff gedreht wird, wobei das Ende festgehalten wird.

8. Brennstoffzellenanordnung, hergestellt nach dem Verfahren von Anspruch 1.

**Revendications**

1. Procédé pour rendre étanche des première et seconde plaques de pile à combustible (11, 21) ayant des première et seconde surfaces (13, 23) dans lequel les première et seconde plaques de pile à combustible sont attenantes pour définir un ensemble de pile à combustible, lesdites surfaces (13, 23) lorsqu'elles sont en position attenantes définissant des passages (32) pour transporter un fluide et lesdites surfaces ayant des régions pré-sélectionnées (14, 15, 24, 25) qui lorsque lesdites surfaces (13, 23) sont attenantes viennent en contact pour réaliser une étanchéité pour retarder une fuite de fluide provenant desdits passages (32), caractérisé en ce que avant de rendre attenantes lesdites surfaces (13, 23), on applique un matériau en polytétrafluoroéthylène sous la forme d'une spirale (41) réalisée par enroulement du matériau le long de son axe principal, aux régions pré-sélectionnées (14, 15, 24, 25) d'au moins une desdites première et seconde surfaces (13, 23).

2. Procédé selon la revendication 1, caractérisé en ce que ladite première surface (13) comporte des canaux (12) s'étendant entre des premier et second bords opposés de ladite première surface (13) lesdits canaux (12) étant espacés les uns des autres et des troisième et quatrième bords opposés de ladite première surface (13), et en ce que lesdites régions pré-sélectionnées (14, 15) de ladite première surface (13) sont les régions de surface entre le troisième bord et son canal le plus proche et le quatrième bord et son canal le plus proche.

3. Procédé selon la revendication 2, caractérisé en ce que les régions pré-sélectionnées (24, 25) de ladite seconde surface (23) bordent lesdits passages (32) lorsque lesdites première et seconde surfaces (13, 23) sont en position attenante.

4. Procédé selon la revendication 3, caractérisé en ce que ladite seconde surface (23) est plate.

5. Procédé selon la revendication 3, caractérisé en ce que ladite seconde surface (23) comporte des canaux (22) s'étendant à travers elle, qui sont alignés avec les canaux (12) de la première surface (13) lorsque les première et seconde surface (13, 23) sont en position attenante.

6. Procédé selon la revendication 1, caractérisé en ce qu'il comporte de plus une étape d'application d'un adhésif en des positions sélectionnées (14', 14'', 14''', 15', 15'', 15''') desdites régions pré-sélectionnées (14, 15) de ladite première surface pour fixer ledit matériau en polytétrafluoroéthylène sous forme d'une spirale (41) à ladite surface (13).

7. Procédé selon la revendication 1, caractérisé en ce que, avant d'appliquer ledit matériau en polytétrafluoroéthylène sous forme de spirale (41), on réalise ledit matériau en polytétrafluoroéthylène sous forme de spirale, ce qui consiste à fixer un ruban plat (51) de matériau en polytétrafluoroéthylène à une extrémité (53) et mettre en rotation l'autre extrémité (52) dudit ruban (51) de matériau en polytétrafluoroéthylène avec ladite extrémité fixée.

8. Ensemble de pile à combustible caractérisé en ce qu'il est réalisé selon le procédé de la revendication 1.

FIG. 1

FIG. 2

FIG. 3

FIG. 4